# EUROPEAN PATENT SPECIFICATION

(11) **EP 3 421 266 B1**
(45) Date of publication and mention of the grant of the patent: **01.06.2022**
(21) Application number: 17178317.8
(22) Date of filing: 28.06.2017
(51) Int. Cl.: B60C 11/16, B29D 30/66

(54) **A DISCHARGE HEAD FOR AN ANTI-SKID INSERT INSTALLATION TOOL, AN ANTI-SKID INSERT AND A SYSTEM FOR PROVIDING A TRACTION DEVICE WITH AN ANTI-SKID INSERT**
AUSGABEKOPF FÜR EIN GLEITSCHUTZEINSATZINSTALLATIONSWERKZEUG, GLEITSCHUTZEINSATZ UND SYSTEM ZUR BEREITSTELLUNG EINER TRAKTIONSVORRICHTUNG MIT EINEM GLEITSCHUTZEINSATZ
TÊTE DE D'ÉVACUATION POUR OUTIL D'INSTALLATION À INSERT ANTIDÉRAPANT, INSERT ANTIDÉRAPANT ET SYSTÈME PERMETTANT DE FOURNIR UN DISPOSITIF DE TRACTION AYANT UN INSERT ANTIDÉRAPANT

(43) Date of publication of application: 02.01.2019
(73) Proprietor: Spikesafe OY, 20360 Turku (FI)
(72) Inventor: HEIKKINEN, Lauri, 20360 Turku (FI); AALTONEN, Jarmo, 20360 Turku (FI); LAUREL, Arttu, 20360 Turku (FI)
(74) Representative: Laine IP Oy

(56) References cited:
- EP-A2- 1 584 453
- US-A1- 2004 231 775

## Description

### BACKGROUND

The present invention relates to vehicle tyres. In particular, the present invention relates to inserting anti-skid inserts into the tread of a pneumatic vehicle tyre. More specifically, the disclosure relates to a discharge head for an anti-skid insert installation tool, to an anti-skid insert and to a system for providing a traction device with an anti-skid insert.

### BACKGROUND

Anti-skid inserts, commonly known as studs, are installed into the tread portion of a tyre with a special installation tool commonly known as a stud gun. Stud guns are typically pneumatically operated tools featuring a manually or automatically controlled interface and a discharge head. The discharge head includes a cylindrical main cavity extending between one opening for receiving an actuator and another opening for discharging the studs. Claws are provided to the discharge opening for spreading a receptive recess in the elastic tread portion of a tyre so as to make way for the stud. The actuator, such as a mandrel, is actuated in the main cavity for pushing the stud along the cavity. When the stud approaches the discharge opening, the claws are retracted from one another against a resilient retainer urging the claws against one another. Communicating with the main cavity, there is a separate cylindrical branch cavity for introducing the studs to the gun. The branch extends in an angle in respect to the main cavity.

Depending on the type of stud being installed, several different types of stud guns are known. US 20160311267 A1, for example, discloses a stud gun for installing studs having either a circular body periphery or one that features four recessed sides, each two adjacent sides being connected with chamfered portions at the corners of the body. The non-circular design is preferred as it prevents or minimizes rotation of the stud about its central axis. The stud gun comprises four claws to orient the stud in a correct angular orientation in respect to the main extending direction of the stud.

EP 1584453 A2 discloses a manual stud gun with an orientation mechanism for orientating studs with oval flanges. The stud gun has a passage formed by a feed tube, loading barrel, and firing channel all exhibiting an oval cross-sectional shape for accommodating the oval flange of the stud.

US 2004/231775 A1 discloses various versions of studs with non-circular flanges. According to US 2004/231775 A1 such studs may be studded with automatic installation machines featuring only three jaw fingers.

Known stud guns having four claws are, however, not particularly suitable for installing studs to tread portions having very small recess for receiving the studs. Tyre manufacturers favour small recesses because the tight fit provides ample grip between the rubber and the stud. Because the claws are quite thick to withstand the bending forces acting on them, the claws take up space in the recess thus only enabling installation of studs having small bottom flanges. However, it is desirable to maximize the footprint of the stud for ensuring a long lasting fit in the recess. It therefore remains desirable to be able to orientate studs having non-circular cross-sections having a maximized foot print to tyres having small receptive recesses for studs.

### SUMMARY

A solution is proposed in the form of a novel discharge head for a for an anti-skid insert installation tool, as defined in claim 1. The discharge head has a body with a main cavity and a supply cavity, which intersects with the main cavity. In a receptive opening in the body having a circular cross-section there is provided a supply insert with a supply cavity in communication with the supply cavity of the body. The supply cavity of the insert has a non-circular cross-section for conveying an anti-skid insert having a body with a respective non-circular cross-section. The discharge head also has an actuation insert inserted into a receptive opening in the body having a circular cross-section. The actuation insert has inner cavities which form the main cavity and the supply cavity of the body.

On the other hand, a corresponding supply insert is proposed. The supply insert is designed to be inserted into such a discharge head and has a generally cylindrical outer surface as well as a central opening having a quadrilateral cross-section for supplying anti-skid inserts with bodies having a non-circular taken along the main extending dimension thereof.

A system for providing a traction device with an anti-skid insert is also proposed. The system includes an anti-skid insert having a body, which exhibits a non-circular cross-section taken along the main extending dimension thereof. The system further includes an anti-skid insert installation tool equipped with above discharge head.

The invention is defined by the features of the independent claim. Some specific embodiments are defined in the dependent claims.

Considerable benefits are gained by virtue of the novel proposition. As the supply cavity is constructed as a non-circular passageway, the anti-skid insert may be oriented during its passage through the discharge head. This opens the possibility to employ less than four claws traditionally required to orientate the anti-skid insert properly. With three or as few as two claws, less space is taken up inside the recess during installation, which in turn enables installation of anti-skid inserts with large bottom flanges to relatively small recesses on the traction device.

### BRIEF DESCRIPTION OF THE DRAWINGS

In the following certain embodiments are described in greater detail with reference to the accompanying drawings, in which:
- FIGURE: 1 illustrates a rear perspective view of a stud discharge head in accordance with at least some embodiments;
- FIGURE 2: illustrates a frontal perspective explosion of the stud discharge head of FIGURE 1;
- FIGURE 3: illustrates partial rear cross-sectional view of the stud discharge head of FIGURE 1;
- FIGURE 4: illustrates a rear elevation view of the stud discharge head of FIGURE 1, and
- FIGURE 5: illustrates a cross-sectional view taken along the line A-A of FIGURE 4.

### DETAILED DESCRIPTION OF EXEMPLARY EMBODIMENTS

In this context, the expressions *longitudinal* and *axial* should be understood as to referring to the orientation along which the anti-skid inserts are designed to be discharged or alternatively the main extending dimension of the body 110. Accordingly, the expression *radial* should be understood as referring to a normal direction in respect to the axial dimension. Also, the expression *rear* should be understood as to referring to the end or part of the discharge head receiving the anti-skid inserts, whereas the expression *front* should be understood as to referring to the end or part of the discharge head discharging the anti-skid inserts.

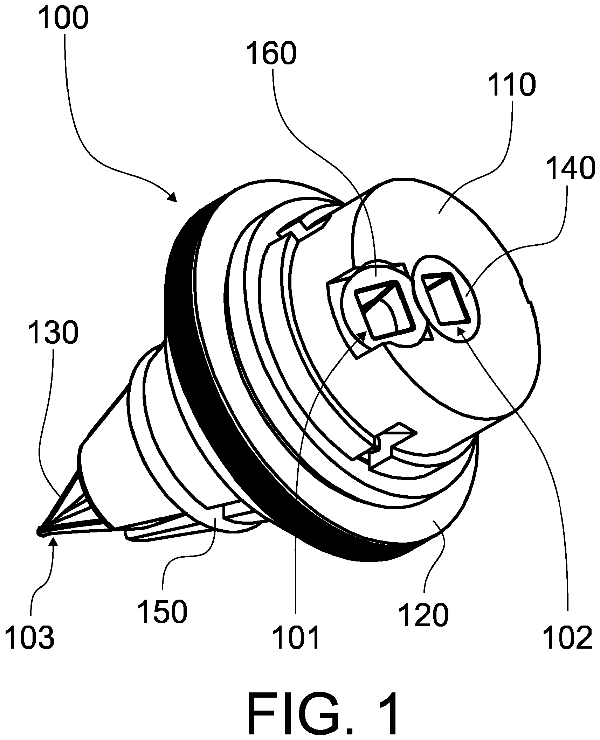

FIGURE 1 shows the main components of a discharge head 100 for an anti-skid insert installation tool (not shown). The discharge head 100 has at one end a supply port 101 for introducing anti-skid inserts (not shown) into the discharge head 100 and an actuation port 102 for facilitating the actuator of the installation tool. The supply port 101 and actuation port 102 are constructed with aid of special inserts 160, 140 inserted to corresponding openings in the body 110 of the discharge head 110. The openings are bores, which may be manufactured easily and with great level of precision into the body 110, e.g. by drilling. At the other end of the discharge head 100 a discharge port 103 is provided for discharging the anti-skid inserts into receptive recesses on a tread portion of a pneumatic tyre, for example. Other examples include virtually all traction devices, such as solid rubber tyres, shoes, snowmobile tracks, Nordic walking sticks, etc. For the purpose of disclosing certain embodiments of the discharge head, installation to a pneumatic vehicle tyre is given as a specific example. It should, however, borne in mind that the same is equally applicable to any traction device. The discharge port 103 is toggled between an open and closed state by claws 130, which are suspended in respect to the body by an elastic retainer 150. The assembly is held together by a nut 120.

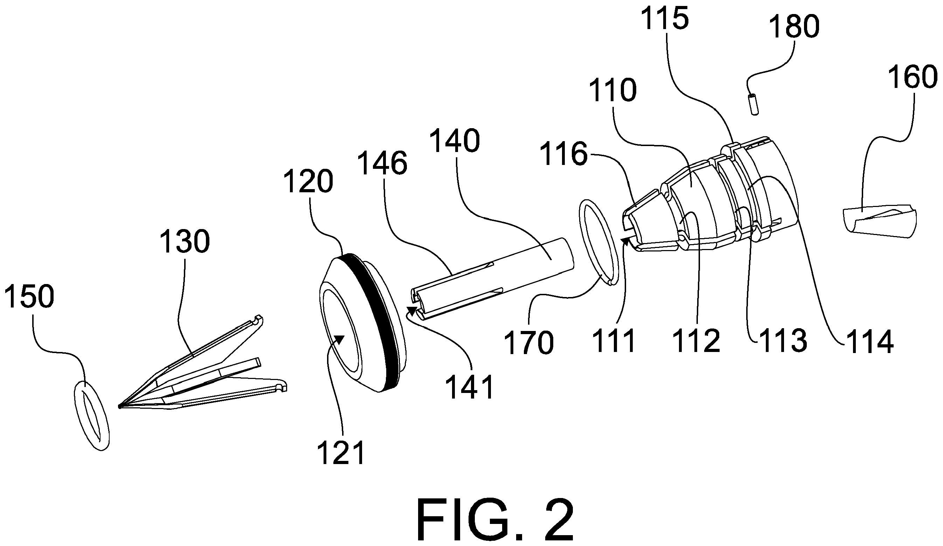

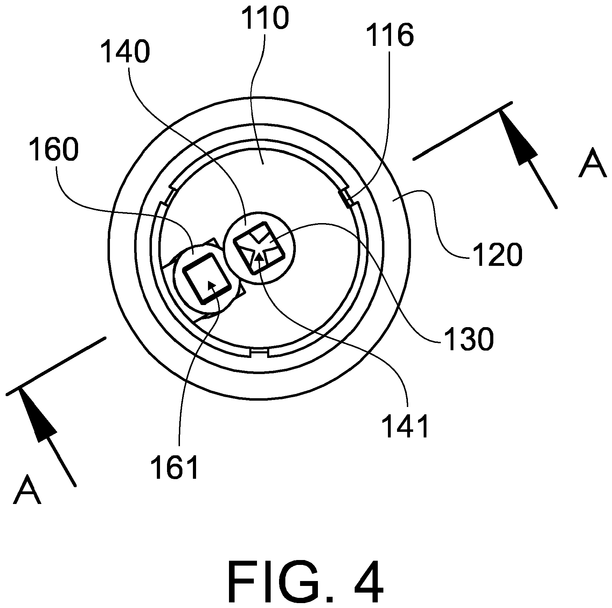

FIGURE 2 shows the components of the discharge head 100 in greater detail. As may be seen, the body 110 has a generally elongated hollow shape. More particularly the body 110 tapers from the rear towards the front along its main extending direction. The outer periphery of the body 110 has been provided with recesses. The frontal recess 112 is a groove for receiving the elastic retainer 150 intended to pinch the claws 130 against one another so as to close the discharge port 103. In the illustrated example the discharge head 100 comprises three claws, but also two claws are foreseen as an option. In a preferred embodiment, the number of claws is less than four. The intermediate recess 113 is a groove for receiving an O-ring for clamping a set of minor guide members (not shown) inside the body 110 designed to maintain the orientation of the stud traveling through the discharge head 100. The rear recess 114 is a groove for receiving the retainer 170, which is intended to engage and compress the rear end of the claws 130 against the body 110. To facilitate the attachment, the rear end of the claws 130 are provided with corresponding recesses to assume the retainer 170 (FIGURE 4). The retainers 150, 170 may be, for example, any suitable elastic profiles, such as O-rings made of nitrile rubber (NBR) or a synthetic rubber, such as EPDM. Rearward of the rear groove 114 there is a flange 115 acting as a stopper for a nut 120. The nut 120 comprises a center opening 121, which is configured to engage the outer surface of the body 110 specifically the section extending between recesses 113, 114. The nut 120 comprises a male thread on the outer surface thereof to secure the discharge head 100 to an installation tool and to hold the components of the discharge head 100 in place.

The body 110 also includes longitudinal slits 116, one for each claw 130. The slits 116 and claws 130 are dimensioned so as to prevent fluent movement of the claws 130 in the respective slits 116. Also, the diameter of the recessed sections 112, 114 of the body 110 and the retainers 150, 170 are set such that the front end of the claws 130, i.e. the end at the discharge port 103, may move away from the center line of the body 110 so as to make way for the anti-skid insert travelling through the discharge head 100. Conversely, the mutual dimensions of the recessed section 114 of the body 110 and the retainer 170 is set such that the rear end of the claws 130, i.e. the end closer to the actuation port 102, will remain compressed against the body 110 (FIGURE 4).

FIGURE 2 further shows the components forming the cavities of the discharge head 100. According to the invention, both cavities are constructed with aid of replaceable inserts. Turning first to the conduit 140, which is a component separate from the body 110. According to the invention, the conduit 140 is provided as an actuation insert, which may be tailored to convey a particular type of an anti-skid insert thus enabling the body 110 to act as a generic component. The body 110 therefore includes a simple and relatively large center bore 111 to facilitate the actuation insert 140, which includes a respective elongated cylindrical envelope. The actuation insert 140 has also been provided with longitudinal slits 146 to allow the radial movement of the claws 130. When assembled, the slits 146 of the actuation insert 140 align with those of the body 110. The actuation insert 140 is installed into the center bore 111 of the body 110 and secured in place by a pin 180. The pin 180 may be a pilot tap or a retainer screw, which either screws into a receptive female thread on the insert 140 or into the female thread on the body 110 so as to tighten the insert 140 into place.

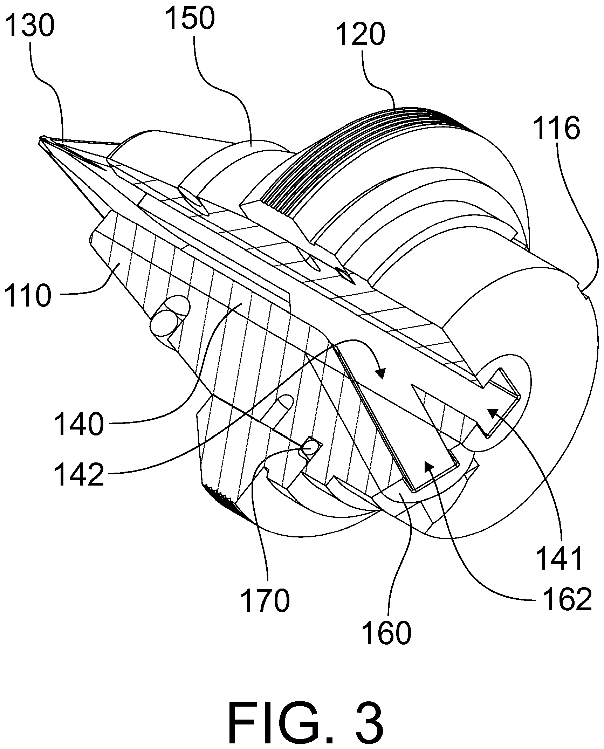

FIGURE 2 further shows the supply insert 160, which is inserted to a receptive opening at the rear of the body 110. The supply insert 160 features a generally cylindrical outer envelope and a central opening having a quadrilateral shape so as to accommodate anti-slip inserts having a non-circular shape. FIGURE 3 shows the cooperation between the supply insert 160, the actuation insert 140 and the body 100 in greater detail. As may be seen, the actuation insert 140 runs longitudinally in the center bore of the body 110 between the rear surface and the discharge port. The actuation insert 140 therefore creates the actuation port 102 (FIGURE 1). Also apparent from FIGURE 3 is the quadrilateral cross-section of the cavity of the actuation insert 140, more specifically the quadrangular cross-section. In the illustrated example the cross-section is a square. The inner cavity of the actuation insert 140 creates the main cavity 141 of the discharge head 100. The main cavity 141 is designed to not only accommodate the non-cylindrical anti-slip insert in a sliding manner but also to allow for the actuator of the installation tool to push the anti-slip insert along the main cavity 141. FIGURE 4 shows, how the main cavity 141 extends through the body 110 as a quadrilateral passageway ending to the claws 130.

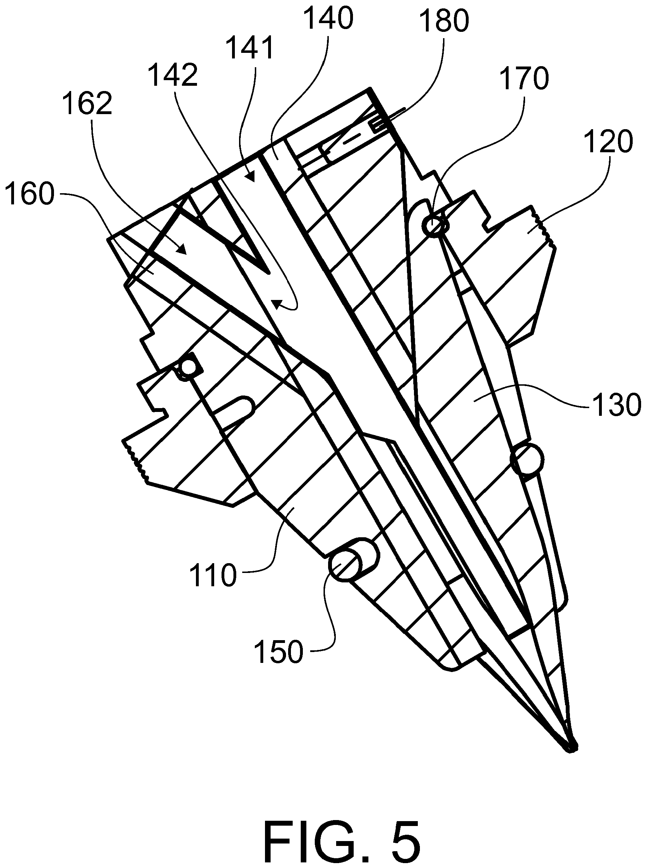

FIGURES 3 and 5 reveal that the actuation insert 140 has been provided with a branch cavity, which forms part of the supply cavity 142 for the discharge head 100. The supply cavity 142 of the actuation insert 140 is constructed to align with the opening for receiving the supply insert 160. The receptive opening is circular for manufacturing reasons, whereby the supply insert 160 may exhibit a cylindrical envelope surface. The supply insert 160 has an inner cavity 162, which is aligned with and corresponds to the shape of that of the supply cavity 142 of the actuation insert 140. Accordingly, the supply cavity 162 of the supply insert 160 may be quadrilateral, particularly quadrangular or square, to accommodate anti-slip inserts having a non-circular shape. The supply cavities 142, 162 of the actuation insert 140 and supply insert 160 aligned form the supply port 101 for the discharge head 100 (FIGURE 1). The supply cavity 142, 162 intersects with the main cavity 141 inside the body 110. Due to the non-parallel orientation between the supply cavity 142, 162 and the main cavity 141, the leading end of the supply insert 160 is slanted.

In operation the discharge head 100 is attached to the installation tool (not shown) and the pneumatically, hydraulically or otherwise operated actuator is aligned with the main cavity 141. With the actuator positioned in a retracted position to the rear of the supply cavity 142, 162, an anti-slip insert is introduced to the discharge head 100 through the supply port 101. The anti-slip insert is shaped and dimensioned such to pass through the supply cavity 142, 162 and into the main cavity 141, in which the anti-slip insert is stopped by the claws 130 being pinched together by the spring force of the retainer 150 acting on the claws 130. As the supply cavity 142, 162 and main cavity 141 exhibit a non-circular cross-section, the anti-slip insert also having a non-circular cross-section will assume a particular orientation in respect to the longitudinal dimension thereof. In other words, the shape of the main cavity 141 is designed to prevent the anti-slip insert from rotating during insertion. According to a particular embodiment, the cross-sectional shape of the anti-slip insert matches that of the supply cavity 142, 162 and/or that of the main cavity 141. This orientation is of particular advantage because the anti-slip insert may be oriented to a correct orientation in respect to the tread of the tyre receiving the anti-slip insert. The orientation of the anti-slip insert may therefore be performed by adjusting the angular orientation of the discharge head 100 in respect to the longitudinal axis thereof with reference to rotation axis of the tyre.

When the discharge port 103 and more specifically the tips of the claws 130 are placed inside the receptive recess in the tread of the tyre and in the correct orientation, the actuator is brought forward. As the actuator proceeds in the main cavity 141, it engages the rear flange of the anti-slip insert and pushes the anti-slip insert along the main cavity 141 towards the discharge port 103. During the passage through the main cavity 141 the anti-slip insert makes contact with the inside surfaces of the claws 130. The claws 130 are therefore preferably equipped with a chamfer shown in the FIGURES to make the contact as fluent as possible. Because the claws 130 extend radially into the main cavity 141 and because the claws 130 are attached pivotably at the rear by retainer 170 and suspended radially at the front by elastic retainer 150, the forward movement of the anti-slip insert overcomes the spring-back factor of the elastic retainer 150 thus retracting the frontal tips of the claws 130 from each other and opening the discharge port 103. While separating from each other the claws 130 spread the recess in the elastic tyre thread open to make room for the anti-slip insert. With the anti-slip insert having exited through the discharge port 103 and having assumed its bottom position in the recess, the discharge head 100 is retracted from the recess, wherein the claws 130 slip away around the anti-slip insert and from within the recess. Next the actuator is retracted to the rear position clearing the supply cavity 142, 162 for a new anti-slip insert for installation.

The present invention makes use of an insert 140 for providing the discharge head with a main cavity 141 with a branch 142 for forming part of the supply cavity. The insert increases the modularity of the discharge head. By changing the insert, a generic body may be adapted to install a specific anti-slip insert.

It is to be understood that the embodiments of the invention disclosed are not limited to the particular structures, process steps, or materials disclosed herein, but may be extended to equivalents thereof as would be recognized by those ordinarily skilled in the art, within the scope of the appended claims. It should also be understood that terminology employed herein is used for the purpose of describing particular embodiments only and is not intended to be limiting.

According to a particular embodiment, the supply insert 160 or the actuation insert 140 or both is/are constructed as a sacrificial member made of material, which is less wear-resistant than the material of the anti-skid insert. For example, for installing anti-skid inserts, the body of which is made of metal, such as aluminium or steel, the supply insert 160 or the actuation insert 140 or both is/are made of hardened steel or tool steel, which is more wear-resistant than the material of the body of the anti-skid insert but less wear-resistant than the material of the hard metal bit of the anti-skid insert. With such an arrangement, the insert(s) will erode sparing the anti-skid insert from damage. Since the insert(s) is/are interchangeable, the body will also remain intact thus increasing the life of the discharge head.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention within the scope of the appended claims.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

**REFERENCE SIGNS LIST**

| | |
|---|---|
| 100 | discharge head |
| 101 | supply port |
| 102 | actuation port |
| 103 | discharge port |
| 110 | body |
| 111 | center bore |
| 112 | recess |
| 113 | recess |
| 114 | recess |
| 115 | flange |
| 116 | slit |
| 120 | nut |
| 121 | opening |
| 130 | claw |
| 140 | actuation insert, conduit |
| 141 | main cavity |
| 142 | branch cavity |
| 150 | retainer |
| 160 | supply insert |
| 162 | supply cavity |
| 170 | retainer |
| 180 | pin |

CITATION LIST

## Claims

1. A discharge head (100) for an anti-skid insert installation tool, comprising:
- a body (110) comprising a main cavity (141) and a supply cavity (142) intersecting with the main cavity (141), and
- a supply insert (160) inserted into a receptive opening in the body (110), the supply insert (160) comprising a supply cavity (162) in communication with the supply cavity (142) of the body (110), which supply cavity (162) of the supply insert (160) has a non-circular cross-section for conveying an anti-skid insert having a body with a respective non-circular cross-section,
**characterized in that**:
- the receptive opening in the body (110) for the supply insert (160) has a circular cross-section,
- the discharge head (100) comprises an actuation insert (140) inserted into a receptive opening in the body (110), wherein the actuation insert (140) comprises inner cavities forming the main cavity (141) and the supply cavity (142) of the body (110), and **in that**
- the receptive opening in the body (110) for the actuation insert (140) has a circular cross-section.

2. The discharge head (100) according to claim 1, wherein the discharge head (100) is configured to insert anti-skid inserts with bodies having a non-circular shape taken along the main extending dimension thereof.

3. The discharge head (100) according to claim 1 or 2, wherein the discharge head (100) comprises a plurality of claws (130) provided to the body (110).

4. The discharge head (100) according to any of the preceding claims, wherein the discharge head (100) comprises at most three claws (130), preferably no more or less than three claws (130).

5. The discharge head (100) according to any of the preceding claims, wherein the supply insert (160) is constructed as a sacrificial member made of material, which is less wear-resistant than the material of the anti-skid insert.

6. The discharge head (100) according to any of the preceding claims, wherein the supply cavity (162) of the supply insert (160) has a quadrilateral cross-section, particularly a quadrangular cross-section, such as a square.

7. The discharge head (100) according to any of the preceding claims, wherein the main cavity (141) extends along a first direction and the supply cavity (142) of the body (110) extends in a second direction non-parallel to the first direction.

8. The discharge head (100) according to any one of the preceding claims, wherein the supply cavity (142) of the actuation insert (140) is co-axial and shares a cross-sectional shape with that of the supply insert (160).

9. The discharge head (100) according to any of the preceding claims, wherein the supply insert (160) comprises a generally cylindrical outer surface and a central opening having a quadrilateral cross-section for supplying anti-skid inserts with bodies having a non-circular shape taken along the main extending dimension thereof.

10. A system for providing a traction device with an anti-skid insert, the system comprising:
- an anti-skid insert comprising a body, which exhibits a non-circular cross-section taken along the main extending dimension thereof,
- an anti-skid insert installation tool comprising a discharge head according to any one of the preceding claims 1 to 8.

## Patentansprüche

1. Ausgabekopf (100) für ein Gleitschutzeinsatzinstallationswerkzeug, umfassend:
- einen Körper (110), der einen Haupthohlraum (141) und einen sich mit dem Haupthohlraum (141) kreuzenden Zuführhohlraum (142) umfasst, und
- einen Zuführeinsatz (160), der in eine Aufnahmeöffnung in dem Körper (110) eingesetzt ist, wobei der Zuführeinsatz (160) einen Zuführhohlraum (162) umfasst, der mit dem Zuführhohlraum (142) des Körpers (110) in Verbindung steht, wobei der Zuführhohlraum (162) des Zuführeinsatzes (160) einen nicht kreisförmigen Querschnitt aufweist, um einen Gleitschutzeinsatz zu befördern, der einen Körper mit einem jeweiligen nicht kreisförmigen Querschnitt aufweist,
**dadurch gekennzeichnet, dass**:
- die Aufnahmeöffnung im Körper (110) für den Zuführeinsatz (160) einen kreisförmigen Querschnitt aufweist,
- der Ausgabekopf (100) einen Betätigungseinsatz (140) umfasst, der in eine Aufnahmeöffnung in dem Körper (110) eingesetzt ist, wobei der Betätigungseinsatz (140) innere Hohlräume umfasst, die den Haupthohlraum (141) und den Zuführhohlraum (142) des Körpers (110) bilden, und dass
- die Aufnahmeöffnung im Körper (110) für den Betätigungseinsatz (140) einen kreisförmigen Querschnitt aufweist.

2. Ausgabekopf (100) nach Anspruch 1, wobei der Ausgabekopf (100) konfiguriert ist, um Gleitschutzeinsätze mit Körpern einzusetzen, die eine nicht kreisförmige Form aufweisen, die sich entlang der Haupterstreckungsabmessung davon erstreckt.

3. Ausgabekopf (100) nach Anspruch 1 oder 2, wobei der Ausgabekopf (100) eine Vielzahl von Klauen (130) umfasst, die am Körper (110) bereitgestellt sind.

4. Ausgabekopf (100) nach einem der vorstehenden Ansprüche, wobei der Ausgabekopf (100) höchstens drei Klauen (130) umfasst, bevorzugt nicht mehr oder weniger als drei Klauen (130).

5. Ausgabekopf (100) nach einem der vorstehenden Ansprüche, wobei der Zuführeinsatz (160) als ein Opferelement aus einem Material ausgebildet ist, das weniger verschleißfest ist als das Material des Gleitschutzeinsatzes.

6. Ausgabekopf (100) nach einem der vorstehenden Ansprüche, wobei der Zuführhohlraum (162) des Zuführeinsatzes (160) einen viereckigen Querschnitt, insbesondere einen viereckigen Querschnitt, wie ein Quadrat, aufweist.

7. Ausgabekopf (100) nach einem der vorstehenden Ansprüche, wobei sich der Haupthohlraum (141) entlang einer ersten Richtung erstreckt und der Zuführhohlraum (142) des Körpers (110) sich in einer zweiten Richtung erstreckt, die nicht parallel zu der ersten Richtung verläuft.

8. Ausgabekopf (100) nach einem der vorstehenden Ansprüche, wobei der Zuführhohlraum (142) des Betätigungseinsatzes (140) koaxial ist und eine Querschnittsform mit der des Zuführeinsatzes (160) teilt.

9. Ausgabekopf (100) nach einem der vorstehenden Ansprüche, wobei der Zuführeinsatz (160) eine im Allgemeinen zylindrische Außenoberfläche und eine zentrale Öffnung mit einem vierseitigen Querschnitt zum Zuführen von Gleitschutzeinsätzen mit Körpern umfasst, die entlang ihrer Haupterstreckungsabmessung eine nicht kreisförmige Form aufweisen.

10. System zur Bereitstellung einer Zugvorrichtung mit einem Gleitschutzeinsatz, wobei das System Folgendes umfasst:
- einen Gleitschutzeinsatz, der einen Körper umfasst, der einen nicht kreisförmigen Querschnitt entlang der Haupterstreckungsabmessung davon aufweist,
- ein Gleitschutzeinsatzinstallationswerkzeug, das einen Ausgabekopf nach einem der vorstehenden Ansprüche 1 bis 8 umfasst.

## Revendications

1. Tête d'évacuation (100) pour un outil d'installation d'insert antidérapage, comprenant :
- un corps (110) comprenant une cavité principale (141) et une cavité d'alimentation (142) croisant la cavité principale (141), et
- un insert d'alimentation (160) inséré dans une ouverture de réception dans le corps (110), l'insert d'alimentation (160) comprenant une cavité d'alimentation (162) en communication avec la cavité d'alimentation (142) du corps (110), laquelle cavité d'alimentation (162) de l'insert d'alimentation (160) présente une section transversale non circulaire pour le transport d'un insert antidérapage ayant un corps avec une section transversale non circulaire respective,
**caractérisé en ce que** :
- l'ouverture de réception dans le corps (110) pour l'insert d'alimentation (160) présente une section transversale circulaire,
- la tête d'évacuation (100) comprend un insert d'actionnement (140) inséré dans une ouverture de réception dans le corps (110), dans lequel l'insert d'actionnement (140) comprend des cavités intérieures formant la cavité principale (141) et la cavité d'alimentation (142) du corps (110), et **en ce que**
- l'ouverture de réception dans le corps (110) pour l'insert d'actionnement (140) présente une section transversale circulaire.

2. Tête d'évacuation (100) selon la revendication 1, dans laquelle la tête d'évacuation (100) est configurée pour insérer des inserts antidérapage avec des corps ayant une forme non circulaire prise le long de la dimension d'extension principale de celle-ci.

3. Tête d'évacuation (100) selon la revendication 1 ou 2, dans laquelle la tête d'évacuation (100) comprend une pluralité de griffes (130) prévues sur le corps (110).

4. Tête d'évacuation (100) selon l'une quelconque des revendications précédentes, dans laquelle la tête d'évacuation (100) comprend au plus trois griffes (130), de préférence pas plus ou moins de trois griffes (130).

5. Tête d'évacuation (100) selon l'une quelconque des revendications précédentes, dans laquelle l'insert d'alimentation (160) est construit comme un élément sacrificiel réalisé en matériau qui est moins résistant à l'usure que le matériau de l'insert antidérapage.

6. Tête d'évacuation (100) selon l'une quelconque des revendications précédentes, dans laquelle la cavité d'alimentation (162) de l'insert d'alimentation (160) présente une section transversale quadrilatérale, particulièrement une section transversale quadrangulaire, telle qu'un carré.

7. Tête d'évacuation (100) selon l'une quelconque des revendications précédentes, dans laquelle la cavité principale (141) s'étend le long d'une première direction et la cavité d'alimentation (142) du corps (110) s'étend dans une seconde direction non parallèle à la première direction.

8. Tête d'évacuation (100) selon l'une quelconque des revendications précédentes, dans laquelle la cavité d'alimentation (142) de l'insert d'actionnement (140) est coaxiale et partage une forme de section transversale avec celle de l'insert d'alimentation (160).

9. Tête d'évacuation (100) selon l'une quelconque des revendications précédentes, dans laquelle l'insert d'alimentation (160) comprend une surface extérieure généralement cylindrique et une ouverture centrale ayant une section transversale quadrilatérale pour l'alimentation d'inserts antidérapage avec des corps ayant une forme non circulaire prise le long de la dimension d'extension principale de celui-ci.

10. Système pour doter un dispositif de traction d'un insert antidérapage, le système comprenant :
- un insert antidérapage comprenant un corps qui montre une section transversale non circulaire prise le long de la dimension d'extension principale de celui-ci,
- un outil d'installation d'insert antidérapage comprenant une tête d'évacuation selon l'une quelconque des revendications précédentes 1 à 8.
